# EUROPEAN PATENT SPECIFICATION

(11) **EP 4 370 895 B1**
(45) Date of publication and mention of the grant of the patent: **18.11.2026**
(21) Application number: 22747767.6
(22) Date of filing: 12.07.2022
(51) Int. Cl.: G01N 1/30, C09B 67/42, C09B 67/00

(54) **STAINING COMPOSITIONS FOR BIOLOGICAL, CYTOLOGICAL, HISTOLOGICAL AND AUTOPSICAL SAMPLES**
FÄRBEPRÄPARATE FÜR BIOLOGISCHE, ZYTOLOGISCHE, HISTOLOGISCHE UND AUTOPSISCHE PROBEN
COMPOSITIONS DE COLORATION POUR LES ÉCHANTILLONS BIOLOGIQUES, CYTOLOGIQUES, HISTOLOGIQUES ET AUTOPSIQUES

(30) Priority: 13.07.2021 IT 202100018434
(43) Date of publication of application: 22.05.2024
(73) Proprietor: Diapath S.p.A., 24057 Martinengo (BG) (IT)
(72) Inventor: LUPO, Carmelo, 24057 Martinengo (BG) (IT); CASATTA, Nadia, 24057 Martinengo (BG) (IT); BATTISTEL, Alberto, 24057 Martinengo (BG) (IT); BERGAMINI, Vladimiro, 24057 Martinengo (BG) (IT)
(74) Representative: Trupiano, Federica
(86) International application number: PCT/IB2022/056429
(87) International publication number: WO 2023/285968

(56) References cited:
- WO-A1-2008/112993
- JP-A- 2018 162 986
- US-A- 4 193 980
- US-A- 5 372 801
- US-A1- 2013 302 852
- US-A1- 2019 310 271

## Description

### Summary of the Invention

The present invention relates to compositions for the preparation of solutions for contrast staining of biological, cytological, histological and autopsical samples, and their use in the preparation of said samples to be analysed.

### Background art

The anatomo-pathological diagnosis is the result of the interpretation by the anatomo-pathologist of the morphological, macroscopic and microscopic characteristics of the biological sample under examination. To provide an accurate and complete diagnosis, the sample excised from the patient must undergo a series of treatments necessary to make the sample taken stable and with the essential characteristics to be observed in transparency under the microscope. In particular, once the sample to be analyzed has been fixed and processed (e.g., dehydrated, embedded in paraffin, cut and re-hydrated in the case of a histological sample), the sample to be analyzed will undergo specific staining in several steps, which is aimed at the possibility of highlighting the different cellular structures by contrasting all the components present in the sample.

Normally, the sample must finally undergo a final dehydration and clarification step before mounting on the slide so that it is observable under the microscope and remains stable for a certain period of time.

The staining process is very important in the course of the preparation of a sample to be examined by observation under an optical microscope. Correct staining, in fact, results in good visualization during the analysis of all the components present in the sample, while bland or inaccurate staining can lead to reading inaccurate or misleading results.

In general, a sample to be analyzed through the use of an optical microscope can be stained by employing different types of compounds, often used in succession, which are applied following well known protocols. In optical microscopy, the final chromatic effect is determined by the different affinity of the various staining compounds used for the different tissue/cellular structures, thus allowing to identify the physiological architecture of the tissues and/or the presence of specific cell types and highlight possible pathological processes taking place.

In general, the staining compounds in the histological, cytological and ultrastructural fields are defined as those chemicals that bind to specific cellular components by increasing their contrast with the remaining part of the sample. Thus, a dye is defined as a molecule that is soluble in a solvent and is provided with its own color, capable of stably binding to cell and tissue substrates, imparting to them a color visible under an optical microscope.

In the histological field, the approach normally followed for the first level of investigation involves the use of Hematoxylin and Eosin (H&E) staining, which, based on the morphological characteristics of the sample highlighted by the staining, already allows the diagnosis to be determined in most cases. This type of staining is considered very important in the diagnostic procedure and is widely used in all histology and anatomic pathology laboratories.

In more detail, H&E staining thus involves the use of two separate dyes to define different cell structures.

In particular, hematoxylin is a plant substance extracted from the wood of a tree, the *Haematoxylum campechianum,* and is a basic dye capable of staining in blue/purple the nucleus of the cells. In its natural form, hematoxylin is in the form of yellow-brown crystals soluble in water, alcohol, and glycerin and has no staining properties. The actual staining compound is its oxidation product (hematein) which, however, has little affinity for the tissues. For these two reasons, on the one hand, oxidizing substances (e.g., potassium permanganate) that are capable of converting hematoxylin to its staining form are added to hematoxylin solutions for use in histological field and, on the other end, compounds are added that give it a positive charge to enable its binding to the nuclear structures. This second class of compounds, called mordants or etchants, is mainly constituted by metal ions added, for example, in the form of potassic, ferric or chromic alum. The metal-hematin complexes are those that are found to permanently stain cell nuclei and are stabilized thanks to a final step in alkaline solutions.

Eosin, on the other hand, is a weakly acidic artificial dye capable of staining the cytoplasm of the cells as well as the connective tissue and the intercellular substance, in various shades of pink. Chemically, eosin is a tetrabromofluorescein, a heterocyclic organic xanthene compound which is poorly soluble in water.

The process of staining the histological tissues using these two staining compounds takes place in two steps: the solution containing the hematoxylin and the necessary additives are first added, and the staining complex binds to the negatively charged phosphate groups of the nucleic acids inside the nucleus, thus causing this portion of the cell to take on a blue/purple color. In the next step, contrast staining occurs, with the eosin binding instead to the plasma-proteins that have positive charge; the cytoplasm and the intercellular substances thus take on a pink/red color, while the erythrocytes appear of magenta-red color. All the cellular and intracellular components to which eosin binds are referred to as eosinophils or acidophils, and these components determine the pinkish staining of all cellular areas outside the nucleus, namely the cytoplasm and extracellular substances.

In the laboratory practice, the staining solutions are not prepared extemporaneously because it would be complicated and expensive, especially in terms of time. Furthermore, to date many laboratories require the use of standardized and certified products to ensure reproducibility and standardization of the procedures used for the diagnosis. Ready-to-use solutions of the two dyes, hematoxylin and eosin, are thus commonly purchased and sold in jerrycans or bottles of various sizes, depending on the frequency of use by the purchasing laboratory. Said solutions contain the staining compound in a standard concentration, the suitable solvent (or mixture of solvents) to hold it in solution, and all the possible additives necessary to carry out the staining activity.

A possible standard protocol for staining a histological sample by using the H&E staining pair is as follows:
- removing the paraffin and hydrating the sample;
- washing the sample by immersing in distilled water for 1 minute;
- staining the nuclei by immersing for 3 minutes the sample in a standard solution containing hematoxylin;
- washing for 4 minutes the sample in running water;
- dehydrating the sample by immersing in ethanol for 1 minute;
- staining the cytoplasm and extracellular matrices by immersing the sample in a standard solution of eosin for 2 minutes;
- dehydrating, clarifying and mounting the sample on a slide according to the known techniques.

However, in the cytological field the most widely used staining is the one named after its first user (Papanicolaou) and is used to differentiate different cell types as well as to assess the nuclear chromatin content. The Papanicolaou staining is a polychrome staining used in diagnostic cytology, basically oncology, which in fact allows different cell types to be differentiated on the basis of the color assumed by the cytoplasm and instead to assess the chromatin content on the basis of the nuclear staining. It is applied to both gynecological (Pap test) and other derived (non-gyn) samples.

Also in this case, a first step of staining the nuclear component with hematoxylin is performed, followed by a second step of cytoplasmic staining with solutions of various possible dyes, usually in alcohol-based solutions to increase the transparency of the cytoplasm. In particular, Orange G6 (OG6) can be used, which allows global staining of the cytoplasmic components in orange. Another widely used dye is a mixture between eosin and the dye called Light Green, to give the EA50 dye.

The commercially available solutions of OG6 and EA50 are, as previously described for the staining of the histological analysis, ready-to-use solutions that, in the case of these dyes, are prepared by using an alcohol-based solvent.

A possible standard protocol for staining a cytological sample by using the Papanicolaou staining is as follows:
- passing in 95% alcohol (3' approx.);
- washing the sample by immersing in distilled water for 3 minutes;
- staining the nuclei by immersing for 3 minutes the sample in a standard solution containing hematoxylin;
- passing the sample in water for 2 minutes;
- dehydrating the sample by immersing in ethanol for 2 minutes;
- staining the cytoplasm by immersing for 45 seconds the sample in a standard solution of OG6;
- washing the sample twice by immersing in ethanol for 2 minutes;
- staining a second time the cytoplasm by immersing for 2 minutes e 30 seconds the sample in a standard solution of EA50;
- dehydrating, clarifying and mounting the sample on a slide according to the known techniques.

Thus, the staining techniques of the histological and cytological samples are well known to the skilled in the art and are widely used, however, the ready-to-use standard staining solutions used today are characterized by a number of disadvantages, mainly related to the fact that they are bulky liquids to be transported which, in most cases, have flammability characteristics that oblige to use specific precautions both during their transport and during storage, at the retailers and end users. Furthermore, said solutions are not stable at high temperatures and could undergo changes in the concentration of the dye solubilized in them, or other sort of deterioration, a bottle should be opened and not completely consumed within a short period of time.

For these reasons, there is still a need to find new systems which will enable laboratories using these staining solutions to have quickly the right amount of ready-to-use solution, that is, a solution at the right concentration of dye and already containing all the additives necessary and expected for its operation. Such new systems, would allow laboratories, that would use these staining solutions, to have the right amount of ready-to-use solution without the need to own specific equipment for preparing such solutions, but also without the encumbrance of large bottles and/or cabinets dedicated to storing flammable substances.

### Objects of the invention

An object of the invention is to provide a composition for the extemporaneous preparation of staining solutions for the treatment of biological, cytological, histological and autopsical samples for their analysis, which are easy to transport and use and which significantly reduce the packaging required for transportation and storage. The composition of the present invention is defined in claim 1.

Another object of the invention is to use said compositions for the extemporaneous preparation of staining solutions for biological, cytological, histological and autopsical samples and for their analysis.

The use of the inventive composition is defined in claim 8.

Still an object of the invention is to provide a process for the preparation of said staining solutions from said compositions.

A further object of the invention is to provide methods and processes which use said compositions.

These and other objects are the subject matter of the present invention as detailed in the following section.

### Description of the invention

Object of the present invention are compositions for the preparation of staining solutions used for contrast histochemical staining of biological, histological, cytological and autopsical samples, which is performed in order to carry out their analysis by optical microscopy.

The compositions of the invention are solid or semi-solid compositions, preferably solid, comprising at least one staining substance and, if desired or necessary, one or more additives that allow and/or enhance the staining capability of the staining substance itself, as well as, if desired or necessary, one or more excipients that ensure the stability and performance of the composition itself.

By the term "semi-solid" is meant herein to refer to a composition with intermediate characteristics of compactness and viscosity between those of a liquid and those of a solid.

Herein, the term "additive" is used to refer to a component added to the composition that has the function of assisting the staining molecule in carrying out its function, whereas by the term "excipient" is meant to refer to a component, which is inert from the point of view of the staining activity, used to improve the technological characteristics of the solid or semi-solid composition and to allow its proper use.

According to a preferred embodiment of the invention, the staining substances that can be part of the composition are all the staining substances commonly used and known to the skilled in the art of the contrast histochemical staining of biological, histological, cytological and/or autopsical samples for their observation under the optical microscope. Particularly preferred are the dyes known as hematoxylin, eosin, OG6 and Light Green, which can be present in the compositions of the invention as a single staining component or in admixture with each other.

According to a preferred aspect of the invention, the composition comprises the dye hematoxylin and at least two functional additives selected from an oxidant, preferably sodium iodate, potassium iodate or potassium permanganate, and a mordant, preferably potassium aluminum sulfate, iron chloride or iron ammonium sulfate, more preferably aluminum sulfate dodecahydrate, and possible excipients.

According to another aspect of the invention, the composition comprises the dye eosin and possibly one or more excipients.

According to a further aspect of the present invention, the composition comprises the OG6 dye and the phosphotungstic acid hydrate or citric acid as a functional additive and possibly one or more excipients.

According to another aspect of the present invention, the composition comprises eosin and light green dyes and phosphotungstic acid hydrate or citric acid as functional additive and possibly one or more excipients.

According to an aspect of the invention, said compositions are constituted by a mixture of powders, as-is or further processed, comprising at least one staining substance and the possible additives and/or excipients, which is divided into individual doses of appropriate size and weight necessary for the preparation of specific quantities of staining solutions once dispersed in the correct amount of solvent or solvent mixture. In particular, the composition of the invention may be, for example, in the form of granules in sachets or tablets that, once poured into the prescribed amount and type of solvent, are capable of dispersing rapidly and constitute the staining solution to be used for contrast staining of biological, histological, cytological and/or autopsical samples.

If desired or necessary, the staining solution thus obtained may undergo a process of filtration through an appropriately sized filter prior to its use, in order to remove possible components of the solid composition, other than the dye and additives, that are not completely soluble in the reference solvent mixture for the composition considered.

According to another aspect of the present invention, said compositions are constituted by a semi-solid formulation, for example a gel formulation, divided into individual doses of appropriate weight, necessary for the preparation of specific quantities of staining solutions once dispersed in the correct amount of solvent or solvent mixture. In particular, the composition of the invention may be, for example, contained inside sachets or in the form of single-dose soluble packaging and, once placed into the prescribed amount and type of solvent, is capable of dispersing rapidly and constituting the staining solution to be used for contrast staining of biological, histological, cytological and/or autopsical samples.

The term "gel" is used herein to refer to an aqueous or alcohol-based semi-solid composition made more or less viscous by the addition of a gelling/thickening agent. Said gelling/thickening agents are well known by the skilled in the art and are added to the formulation according to the known practice in the appropriate amounts depending on the viscosity degree that must be achieved.

The techniques that can be used for the preparation of the solid or semi-solid compositions of the invention are all of those known to the skilled in art, such as granulation, compression, solubilization, gelling, etc. Preferably, the compositions of the invention are solid compositions obtained by mixing the constituent powders and subsequent granulation or else subsequent direct compression of the same.

The excipients that can be added to the compositions of the invention and that facilitate their production and improve the final characteristics of the product are known to the skilled in the art, who can use them according to the dictates of the known practice depending on the finished form he wants to obtain and the characteristics of the starting staining compounds. By way of example but not limiting, for example in the case of a solid formulation, excipients can be added that are capable of improving the flowability of the powder mixture to be compacted, increasing its compressibility, optimizing the compression process and promoting the disintegration of the finished product. Non- limiting examples of substances that can be used as excipients in the solid formulations may be substances selected from the class of diluents (e.g., sorbitol, mannitol, fructose, lactose, microcrystalline cellulose), disintegrants (e.g., crospovidone) and/or lubricants (e.g., glyceryl dibehenate).

According to an aspect of the invention, said excipients may constitute from 0 to 70% by weight to the total weight of the composition, preferably they are present in a w/w percentage between 15 and 60%, even more preferably between 20 and 50%.

According to a preferred aspect of the invention, the compositions, which contain at least one staining substance and possibly one or more additives and/or one or more excipients, are formulated so as to carry an amount of dye and possible additives in the correct weight ratio to each other and is suitable for the preparation of 1 L staining solution. According to another aspect of the invention, said compositions are formulated so as to carry an amount of dye and possible additives in the correct weight ratio to each other, which is suitable for the preparation of an amount of solution that fills the tray of standard commercial dyes, i.e., 400/500 mL of solution.

According to an aspect of the invention, the semi-solid compositions, once produced, can be partitioned and packaged into ready-to-use, single-dose soluble sachets or packages; in the case of the solid compositions in powder and/or granules, they can be partitioned and packaged in single-dose sachets. Preferably, the compositions of the invention will be in the form of tablets packaged inside plastic/aluminum laminated blister packs or stored inside bottles or other types of containers, e.g., boxes, by themselves or individually wrapped.

The method for the preparation of said solid or semi-solid compositions, according to techniques known to the skilled in the art, is also object of the present invention.

Object of the present invention is also the method for the preparation of the solutions for contrast staining of biological, histological, cytological and autopsical samples from the previously described solid and semi-solid compositions.

Said method provides, as will be specified in the experimental section below, the dispersion and/or disintegration and/or dissolution at room temperature and under agitation of the composition of the invention inside an appropriate amount of an appropriate solvent or solvent mixture known to the skilled in the art.

Another object of the present invention is a kit constituted by two or more solid or semi-solid compositions according to the invention, accompanied by instructions for the proper preparation of the corresponding staining solutions.

The kit of the present invention is defined in claim 10.

Preferably said kit is constituted by a solid or semi-solid composition based on hematoxylin according to the invention, a solid or semi-solid composition based on eosin according to the invention, and related instructions for the preparation of two staining solutions which allows completing the staining of a histological sample according to standard H&E staining protocols.

According to another preferred aspect, said kit is constituted by a solid or semisolid composition based on hematoxylin according to the invention, a solid or semisolid composition based on OG6, a solid or semi-solid composition based on EA50 according to the invention and related instructions for the preparation of three staining solutions which allows completing the staining of a histological sample according to Papanicolaou standard staining protocols.

The present invention has a number of advantages over the known art in several respects.

First, in terms of the performance of the staining solutions themselves, because the use of the compositions of the invention allows the staining solution to always be freshly prepared in the same laboratory where it is to be used. In fact, a solution that has not had to undergo transportations nor long storage times is not in danger of being altered in its characteristics, for example, it is not in danger of being too concentrated due to the evaporation of one or more of the volatile solvents of which it is constituted or of being less effective due to the degradation of the staining molecules caused by improper storage conditions. Thus, the risks of obtaining altered staining on the treated biological samples will be greatly reduced.

Furthermore, the compositions of the invention, in addition to the described aspects related to the functional characteristics of the staining solutions derived from them, bring significant advantages in terms of environmental impact as well as a marked decrease in the problems related to their distribution and storage.

In fact, from the environmental point of view, the use of plastic in packaging is greatly reduced, if not completely eliminated; furthermore, the overall reduction in the bulk volumes and weights of the material to be transported allows organizing more efficient and, consequently, more environmentally friendly transportation.

The sharp reduction in bulk volumes also underlies a significant shipping and storage cost advantage, both at the retailers and in the end-user laboratories. Furthermore, the total elimination of the flammable liquids, brought about by the possibility of having solid or semisolid compositions available for the extemporaneous preparation of the staining solutions, allows removing the problems related to the need to have transport vehicles and specialized cabinets for handling the flammable substances.

Thus, the transportation and storage costs as well as the environmental impact are greatly reduced thanks to the compositions subject of the present invention.

The invention will now be described by means of the following examples, which are set forth herein for illustrative purposes only and in no way limiting.

### Description of the Figures

Figure 1: Microscope image of a colon section stained (a1) with a hematoxylin solution obtained by disintegrating the tablets (a2) of Example 6 or (b) with a standard solution.
Figure 2: Microscope image of a colon section stained (a1) with a hematoxylin solution obtained by disintegrating the tablets (a2) of Example 7 or (b) with a standard solution.

### Experimental Section

### Example 1

### Solid composition for the preparation of a hematoxylin staining solution

A tablet is prepared containing:
1 g hematoxylin
0.1 g sodium iodate
8.8 g aluminum sulfate dodecahydrate

### Excipients

The tablet, once placed in 0.5 L of solution constituted by 340 mL distilled water, 125 mL ethylene glycol, 10 mL glacial acetic acid and 25 mL ethyl alcohol, at room temperature and under stirring, disintegrates in a few minutes with rapid dissolution of the staining component and additives to form the staining solution that can be used in standard H&E histological and cytological staining protocols of Papanicolaou.

### Example 2

### Solid composition for the preparation of a hematoxylin staining solution

A sachet is prepared containing:
2 g hematoxylin
0.2 g sodium iodate
17.6 g aluminum sulfate dodecahydrate

### Excipients

All the powder contained in the sachet is poured into 1 L of solution constituted by 680 mL distilled water, 250 mL ethylene glycol, 20 mL glacial acetic acid and 50 mL ethyl alcohol, at room temperature and under stirring. A rapid dissolution of the staining component and additives is observed to form the staining solution that can be used in standard H&E and cytological staining protocols of Papanicolaou.

### Example 3

### Solid composition for the preparation of an eosin staining solution

A tablet is prepared containing:
5 g eosin

### Excipients

The tablet, once placed in 1 L of solution constituted by 190 mL distilled water, 800 mL ethyl alcohol and 10 mL glacial acetic acid, at room temperature and under stirring, disintegrates in a few minutes with rapid dissolution of the staining component to form the staining solution that can be used in standard H&E histological staining protocols.

### Example 4

### Solid composition for the preparation of an OG6 staining solution

A tablet is prepared containing:
1.5 g OG6
75 mg phosphotungstic acid hydrate

### Excipients

The tablet, once placed in 1 L of solution constituted by 90 mL distilled water and 910 mL ethyl alcohol, at room temperature and under stirring, disintegrates in a few minutes with rapid dissolution of the staining component to form the staining solution that can be used in standard cytological staining protocols of Papanicolaou.

### Example 5

### Solid composition for the preparation of an EA50 staining solution

A tablet is prepared containing:
2 g eosin
0.15 g Light Green
1 g phosphotungstic acid hydrate

### Excipients

The tablet, once placed in 0.5 L of solution constituted by 50 mL distilled water, 440 mL ethyl alcohol and 10 mL glacial acetic acid, at room temperature and under stirring, disintegrates in a few minutes with rapid dissolution of the staining component to form the staining solution that can be used in standard cytological staining protocols of Papanicolaou.

### Example 6

### Solid composition for the preparation of a hematoxylin staining solution

100 g powder mixture is prepared, which is constituted by:
80 g staining mixture (constituted by hematoxylin, aluminum sulfate and sodium iodate in w/w percentages to each other of 32.3; 64.5 and 3.3%, respectively);
13 g spray-dried mannitol
5 g crospovidone
2 g glyceryl dibehenate.

The mixture is loaded into the hopper of a rotary compressor (AMS8, Ronchi, IT) equipped with a force-sensing system and 11 mm flat punches set to obtain 400 mg tablets.

The tablets obtained have the physical-technological characteristics set forth in Table 1, thus demonstrating the capability of the process to be reproducible and scalable and the good quality of the finished product in terms of disintegration performance.

**Table 1: Physical-technological characteristics of the tablet formulation of Example 6**

| | mean ± standard deviation |
|---|---|
| weight (mg) | 405 ± 5 |
| height (mm) | 2.69 ± 0.03 |
| compression force (kN) | 25.31 ± 0.43 |
| breaking strength (N)¹ | 118 ± 3 |
| friability (%)² | 0.7 |
| disintegration time (minutes and seconds)³ | 6' 17" ± 18" |

| | |
|---|---|
| ¹ dynamometer TBH30, Erweka ² friabilometer TA3, Erweka ³ 3-position disintegration apparatus DT3, Sotax, 800 mL distilled water, room temperature | |

11 tablets of 400 mg (4.4 g in total) were placed in 350 mL distilled water, at room temperature. By keeping the container under stirring, the disintegration occurs in 14 minutes and produces a dark red solution in which some particles remain in suspension. The staining solution is filtered and used with colon tissue sections, after the paraffin removal in an oven at 60°C, according to the following protocol:
- xylene;
- 99 ethyl alcohol;
- 95 ethyl alcohol;
- distilled water;
- hematoxylin staining solution obtained from the tablets or commercial solution (immersion for 6 minutes);
- bluing;
- dehydration.

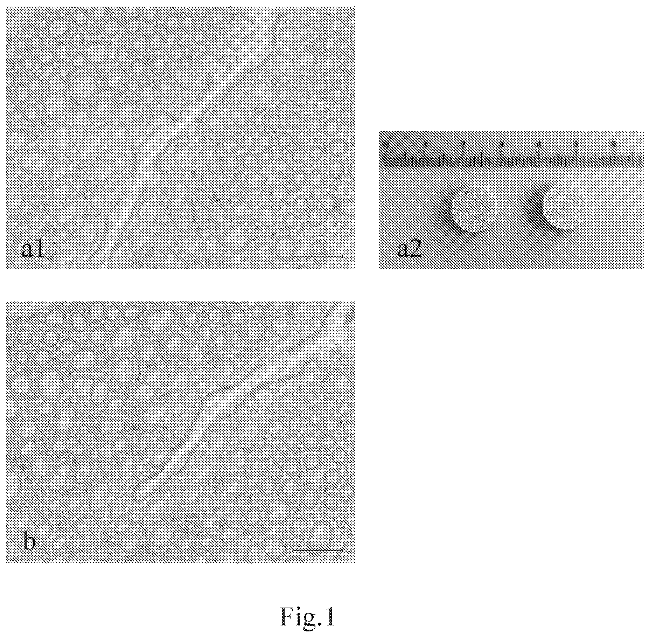

The nuclear detail of the tissues placed on the slides appears to be qualitatively overlapping between each other and highlights the capability of the tablets to reconstitute an adequate staining solution (Figure 1).

### Example 7

### Solid composition for the preparation of a hematoxylin staining solution.

100 g powder mixture is prepared, which is constituted by:
80 g staining mixture (constituted by hematoxylin, aluminum sulfate and sodium iodate in w/w percentages to each other of 32.3; 64.5 and 3.3%, respectively);
13 g spray-dried mannitol
5 g crospovidone
2 g glyceryl dibehenate.

The mixture is compressed by using a rotary compressor (AMS8, Ronchi, IT) equipped with a force-sensing system and 249 mm chamfered punches, by manually filling the die with 4.4 g of powder.

The tablets obtained have the physical-technological characteristics set forth in Table 2, thus demonstrating the capability of the process to be reproducible and scalable and the good quality of the finished product in terms of disintegration performance.

**Table 2: Physical-technological characteristics of the tablet formulation of Example 7**

| | mean ± standard deviation |
|---|---|
| weight (g) | 4.406 ± 0.006 |
| height (mm) | 6.62 ± 0.01 |
| compression force (kN) | 39.71 ± 0.62 |
| breaking strength (N)¹ | 161 |
| disintegration time (minutes and seconds)³ | 1' 26" |

| | |
|---|---|
| ¹ dynamometer TBH30, Erweka ³ 3-position disintegration apparatus DT3, Sotax, 800 mL distilled water, room temperature | |

A 4.4 g tablet has been placed in 35 mL distilled water, at room temperature. The disintegration occurs in 30 seconds, producing an orange/brown solution that, in about 5 minutes, turns dark red and in which some particles remain in suspension. Filtration and use of the staining solution with colon tissue sections, after removal of the paraffin in an oven at 60°C, are carried out according to the following protocol:
- xylene;
- 99 ethyl alcohol;
- 95 ethyl alcohol;
- distilled water;
- hematoxylin staining solution obtained from the tablets or commercial solution (immersion for 6 minutes);
- bluing;
- dehydration.

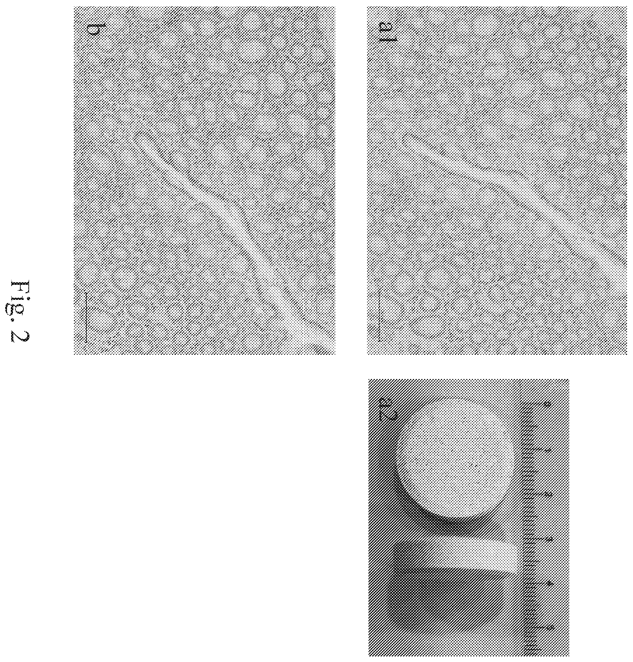

The nuclear detail of the tissues placed on the slides appears to be qualitatively overlapping between each other and highlights the capability of the tablets to reconstitute an adequate staining solution (Figure 2).

### Example 8

### Solid composition for the preparation of an eosin staining solution

100 g powder mixture is prepared, which is constituted by:
50 g staining mixture (constituted by eosin and citric acid in w/w percentages to each other of 90.9 and 9.1%, respectively);
45 g fructose
5 g crospovidone.

The mixture is compressed by using a rotary compressor (AMS8, Ronchi, IT) equipped with a force-sensing system and 249 mm chamfered punches, by manually filling the die with 4.4 g of powder.

The resulting tablets have acceptable physical-technological characteristics in terms of finished product quality and disintegration performance.

Preliminary tests of staining tissue samples of different kinds, by using the solutions resulting from the disintegration of the tablets thus produced, showed good characteristics overlapping with those obtained by using a commercial eosin solution.

## Claims

1. A composition for the preparation of staining solutions intended to be used in the contrast histochemical staining of biological, histological, cytological and autopsical samples, **characterized in that** it is in the solid or semi-solid form and comprises at least one staining substance selected from hematoxylin, eosin, OG6, Light Green and mixtures thereof and one or more additives, **characterized in that** said one or more additives are selected from an oxidizer and a mordant; or phosphotungstic acid.

2. The composition according to any one of the preceding claims **characterized in that** said composition is a tablet.

3. The composition according to any one of the preceding claims **characterized in that** said composition is a powder formulation packaged in single-dose sachets.

4. The composition according to any one of the preceding claims **characterized in that** it constitutes a ready-to-use unit for the preparation of said staining solutions in a volume ranging from 10 mL and 5 L.

5. The composition according to claim 4 **characterized in that** it constitutes a ready-to-use unit for the preparation of 500 mL of said staining solutions.

6. The composition according to any one of the preceding claims, **characterized in that** said composition comprises OG6 dye and the phosphotungstic acid hydrate.

7. The composition according to any one of claims 1 to 5, **characterized in that** said composition comprises eosin and light green dyes and phosphotungstic acid hydrate.

8. Use of the composition of claim 1, for the preparation of staining solutions intended to be used in contrast staining of biological, histological, cytological and autopsical samples.

9. A method for the preparation of staining solutions intended to be used in contrast staining of biological, histological, cytological and autopsical samples, which comprises dispersing and/or disintegrating and/or dissolving the composition of claim 1 within an appropriate amount of an appropriate solvent or solvent mixture.

10. A kit comprising two or more compositions of claim 1 and the related instructions for the preparation of the staining solutions obtainable from said solid compositions.

## Patentansprüche

1. Zusammensetzung zur Herstellung von Färbelösungen, die zur Verwendung bei der histochemischen Kontrastfärbung von biologischen, histologischen, zytologischen und autoptischen Proben bestimmt sind, **dadurch gekennzeichnet, dass** sie in fester oder halbfester Form vorliegt und mindestens eine Färbesubstanz, ausgewählt aus Hämatoxylin, Eosin, OG6, Light Green und Mischungen davon, sowie ein oder mehrere Additive umfasst, **dadurch gekennzeichnet, dass** das eine oder die mehreren Additive ausgewählt sind aus einem Oxidationsmittel und einem Beizmittel; oder Phosphorwolframsäure.

2. Zusammensetzung nach einem der vorhergehenden Ansprüche, **dadurch gekennzeichnet, dass** die Zusammensetzung eine Tablette ist.

3. Zusammensetzung nach einem der vorhergehenden Ansprüche, **dadurch gekennzeichnet, dass** die Zusammensetzung eine Pulverformulierung ist, die in Einzeldosisbeuteln abgepackt ist.

4. Zusammensetzung nach einem der vorhergehenden Ansprüche, **dadurch gekennzeichnet, dass** sie eine gebrauchsfertige Einheit zur Herstellung der genannten Färbelösungen in einem Volumen im Bereich von 10 ml bis 5 l darstellt.

5. Zusammensetzung nach Anspruch 4, **dadurch gekennzeichnet, dass** sie eine gebrauchsfertige Einheit zur Herstellung von 500 ml der genannten Färbelösungen darstellt.

6. Zusammensetzung nach einem der vorhergehenden Ansprüche, **dadurch gekennzeichnet, dass** die genannte Zusammensetzung den Farbstoff OG6 und das Phosphorwolframsäurehydrat umfasst.

7. Zusammensetzung nach einem der Ansprüche 1 bis 5, **dadurch gekennzeichnet, dass** die genannte Zusammensetzung die Farbstoffe Eosin und Light Green sowie Phosphorwolframsäurehydrat umfasst.

8. Verwendung der Zusammensetzung nach Anspruch 1 zur Herstellung von Färbelösungen, die zur Verwendung bei der Kontrastfärbung von biologischen, histologischen, zytologischen und autoptischen Proben bestimmt sind.

9. Verfahren zur Herstellung von Färbelösungen, die zur Verwendung bei der Kontrastfärbung von biologischen, histologischen, zytologischen und autoptischen Proben bestimmt sind, welches das Dispergieren und/oder Zerfallenlassen und/oder Auflösen der Zusammensetzung nach Anspruch 1 in einer geeigneten Menge eines geeigneten Lösungsmittels oder Lösungsmittelgemisches umfasst.

10. Kit, umfassend zwei oder mehr Zusammensetzungen nach Anspruch 1 und die zugehörigen Anweisungen zur Herstellung der Färbelösungen, die aus den genannten festen Zusammensetzungen erhältlich sind.

## Revendications

1. Composition destinée à la préparation de solutions de coloration destinées à être utilisées dans la coloration histochimique par contraste d'échantillons biologiques, histologiques, cytologiques et d'autopsie, **caractérisée en ce qu'**elle se présente sous forme solide ou semi-solide et comprend au moins une substance colorante choisie parmi l'hématoxyline, l'éosine, l'OG6, le Vert Lumière et leurs mélanges, ainsi qu'un ou plusieurs additifs, **caractérisée en ce que** ledit ou lesdits additifs sont choisis parmi un oxydant et un mordant ; ou l'acide phosphotungstique.

2. Composition selon l'une quelconque des revendications précédentes, **caractérisée en ce que** ladite composition se présente sous forme de comprimé.

3. Composition selon l'une quelconque des revendications précédentes, **caractérisée en ce que** ladite composition est une formulation en poudre conditionnée dans des sachets unidoses.

4. Composition selon l'une quelconque des revendications précédentes, **caractérisée en ce qu'**elle constitue une unité prête à l'emploi pour la préparation desdites solutions de coloration dans un volume compris entre 10 ml et 5 l.

5. Composition selon la revendication 4, **caractérisée en ce qu'**elle constitue une unité prête à l'emploi pour la préparation de 500 ml desdites solutions de coloration.

6. Composition selon l'une quelconque des revendications précédentes, **caractérisée en ce que** ladite composition comprend le colorant OG6 et l'hydrate d'acide phosphotungstique.

7. Composition selon l'une quelconque des revendications 1 à 5, **caractérisée en ce que** ladite composition comprend des colorants éosine et vert clair ainsi que de l'acide phosphotungstique hydraté.

8. Utilisation de la composition selon la revendication 1 pour la préparation de solutions de coloration destinées à être utilisées dans la coloration de contraste d'échantillons biologiques, histologiques, cytologiques et d'autopsie.

9. Procédé de préparation de solutions de coloration destinées à être utilisées pour la coloration par contraste d'échantillons biologiques, histologiques, cytologiques et d'autopsie, qui comprend la dispersion et/ou la désintégration et/ou la dissolution de la composition selon la revendication 1 dans une quantité appropriée d'un solvant ou d'un mélange de solvants approprié.

10. Kit comprenant deux ou plusieurs compositions selon la revendication 1 et les instructions correspondantes pour la préparation des solutions de coloration pouvant être obtenues à partir desdites compositions solides.
